(19) **Europäisches Patentamt / European Patent Office / Office européen des brevets**

(11) **EP 3 489 708 A1**

(12) **EUROPEAN PATENT APPLICATION**
published in accordance with Art. 153(4) EPC

(43) Date of publication:
**29.05.2019 Bulletin 2019/22**

(21) Application number: **17872130.4**

(22) Date of filing: **09.01.2017**

(51) Int Cl.:
***G01S 3/46*** *(2006.01)*

(86) International application number:
**PCT/CN2017/070615**

(87) International publication number:
**WO 2018/090477 (24.05.2018 Gazette 2018/21)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **18.11.2016 CN 201611059005**

(71) Applicant: **NINEBOT (BEIJING) TECH. CO., LTD.
Beijing 100192 (CN)**

(72) Inventors:
• **REN, Guanjiao**
 **Beijing 100192 (CN)**
• **WANG, Xuhui**
 **Beijing 100192 (CN)**
• **ZHONG, Yincheng**
 **Beijing 100192 (CN)**
• **PU, Li**
 **Beijing 100192 (CN)**

(74) Representative: **Regimbeau
20, rue de Chazelles
75847 Paris Cedex 17 (FR)**

(54) **LOCATING METHOD AND DEVICE, AND COMPUTER STORAGE MEDIUM**

(57) Disclosed in an embodiment of the present invention are a locating method and device, and a computer storage medium for realizing that an anchor node apparatus locates a beacon apparatus in a range of 360 degrees. The method is applied to an anchor node apparatus. The anchor node apparatus comprises at least three first antennas, wherein a set location of at least one first antenna is not collinear with set locations of the remaining first antennas. The method comprises: receiving a signal sent by a second antenna of a beacon apparatus by means of each of the first antennas; according to a phase of each of the first antennas for receiving the signal, obtaining a phase difference between every two first antennas for receiving the signal; extracting at least three phase differences closest to a pointed orientation; and based on the at least three phase differences, determining the orientation of the beacon apparatus.

A signal transmitted by a second antenna of a beacon device is received by each of the first antennas — S101

A phase difference of the signals received through each pair of first antennas is acquired based on phases of the signals received by the first antennas — S102

At least three phase differences directed to closest orientations are extracted — S103

An orientation of the beacon device is determined based on the at least three phase differences — S104

**FIG. 2**

**Description**

**TECHNICAL FIELD**

The disclosure relates to the field of electronic technology, and particularly to a positioning method, a positioning device and a computer storage medium.

**BACKGROUND**

Relative positioning means that at least one of two terminals measures a relative distance between the two terminals and an orientation (or an angle) relative to each other. For relative positioning, an anchor is installed in one of the two terminals, and the anchor is provided with two antennas. A tag is installed in the other of the two terminals, and the tag is provided with an antenna. The anchor receives a signal transmitted by the tag, and calculates a distance and a direction based on the signal according to the principle such as Time of Flight (TOF) and Angle of Arrival (AOA).

However, in the above relative positioning method, a signal transmitted by a tag in front of the anchor has a same phase difference as a signal transmitted by a tag at the back of the anchor. Therefore, it is unable to position the tag in the range of 360 degrees of the anchor.

**SUMMARY**

A positioning method, a positioning device and a computer storage medium are provided according to the embodiments of the disclosure, to position a beacon device in a range of 360 degrees of an anchor device.

A positioning method applied to an anchor device is provided according to a first aspect of an embodiment of the disclosure. The anchor device includes at least three first antennas. A disposing position of at least one of the at least three first antennas is not collinear with a disposing position of each of one or more other first antennas. The positioning method includes:

a signal transmitted by a second antenna of a beacon device is received by each of the at least three first antennas;
a phase difference between the signals received by each pair of first antennas of the at least three first antennas is acquired based on phases of the signals received by the at least three first antennas;
at least three phase differences directed to closest orientations are extracted; and
an orientation of the beacon device is determined based on the at least three phase differences.

In an embodiment, the operation that the orientation of the beacon device is determined based on the at least three phase differences may include:

a suspicious orientation of the beacon device is determined based on the at least three phase differences;
whether a confidence level of the suspicious orientation reaches a first threshold is determined based on a historical orientation of the beacon device; and
the suspicious orientation is determined as an orientation of the beacon device in a case that the confidence level of the suspicious orientation reaches the first threshold; and in a case that the confidence level of the suspicious orientation does not reach the first threshold, the suspicious orientation is not determined as the orientation of the beacon device, and the orientation of the beacon device is determined based on the historical orientation of the beacon device.

In an embodiment, the operation that the suspicious orientation of the beacon device is determined based on the at least three phase differences may include:

whether the at least three phase differences are directed to the same orientation is determined;
the orientation to which any one of the at least three phase differences is directed is determined as the suspicious orientation in a case that the at least three phase differences are directed to the same orientation; and
an average orientation of the orientations to which the at least three phase differences are directed is determined as the suspicious orientation in a case that the at least three phase differences are directed to different orientations.

In an embodiment, the operation that whether the confidence level of the suspicious orientation reaches the first threshold is determined based on the historical orientation of the beacon device may include:

an estimated orientation is acquired based on the historical orientation;

a ratio of a difference between the suspicious orientation and the estimated orientation to the estimated orientation is calculated, and the ratio is taken as the confidence level;

whether the ratio is greater than or equal to the first threshold is determined; and

it is determined that the confidence level of the suspicious orientation reaches the first threshold in a case that the ratio is greater than or equal to the first threshold, and it is determined that the confidence level of the suspicious orientation does not reach the first threshold in a case that the ratio is less than the first threshold.

In an embodiment, the disposing positions of the at least three first antennas may be at vertexes of a polygon, and length of a longest side of the polygon may be less than a half wavelength of the signal.

In an embodiment, the at least three first antennas may satisfy a vertical linear polarization condition, and purity of linear polarization is greater than a second threshold.

In an embodiment, the second antenna may satisfy a circular polarization condition.

In a second aspect, a positioning device applied to an anchor device is further provided according to an embodiment of the disclosure. The anchor device includes at least three first antennas. A disposing position of at least one of the at least three first antennas is not collinear with a disposing position of each of one or more other first antennas. The positioning device includes a receiving module, a calculating module, an extracting module and a determining module.

The receiving module is configured to receive a signal transmitted through a second antenna of a beacon device through each of the at least three first antennas.

The calculating module is configured to acquire a phase difference between the signals received through each pair of first antennas of the at least three first antennas based on phases of the signals received by the at least three first antennas.

An extracting module is configured to extract at least three phase differences directed to closest orientations.

A determining module is configured to determine an orientation of the beacon device based on the at least three phase differences.

In an embodiment, the determining module may be configured to: determine a suspicious orientation of the beacon device based on the at least three phase differences; determine whether a confidence level of the suspicious orientation reaches a first threshold based on a historical orientation of the beacon device; and determine the suspicious orientation as an orientation of the beacon device in a case that the confidence level of the suspicious orientation reaches the first threshold; and in a case that the confidence level of the suspicious orientation does not reach the first threshold, determine the suspicious orientation is not determined as the orientation of the beacon device, and determine the orientation of the beacon device based on the historical orientation of the beacon device.

In an embodiment, the determining module may be configured to: determine whether at least three phase differences are directed to the same orientation; determine the orientation to which any one of the at least three phase differences are directed as the suspicious orientation in a case that the at least three phase differences are directed to the same orientation; and determine an average orientation of the orientations to which the at least three phase differences are directed as the suspicious orientation in a case that the at least three phase differences are directed to different orientations.

In an embodiment, the disposing positions of the at least three first antennas may be at vertexes of a polygon, and length of a longest side of the polygon may be less than a half wavelength of the signal.

In an embodiment, the at least three first antennas may satisfy a vertical linear polarization condition, and purity of linear polarization may be greater than a second threshold.

In an embodiment, the second antenna may satisfy a circular polarization condition.

In a third aspect, a computer storage medium is further provided according to an embodiment of the disclosure, computer executable instructions are stored in the computer storage medium, and the computer executable instructions are configured to execute the positioning method according to the embodiment of the disclosure.

The above one or more technical solutions according to the embodiments of the disclosure have at least the following one or more technical effects.

In the technical solutions according to the embodiments of the disclosure, the anchor device has at least three first antennas, a disposing position of at least one of the at least three first antennas is not collinear with a disposing position of other antennas. The anchor device receives a signal transmitted by the second antenna of the beacon device through each of the at least three first antennas, and acquires a phase difference of the signals received through each pair of first antennas based on phases of the signals received by the at least three first antennas. Since at least one first antenna is disposed to be not collinear with the other first antenna, at least three phase differences of all of the phase differences are directed to closest orientations, and mirroring orientations to which mirroring phase differences corresponding to the at least three phase differences are directed and an orientation to which other phase difference is directed does not converge to the same orientation. Therefore, at least three phase differences directed to closest orientations are extracted, and the orientation of the beacon device is determined based on the at least three phase differences. It can be seen that a signal from the second antenna is received by the above at least three first antennas, a singular solution is excluded based on the phase differences, an orientation of the beacon device is determined within the range of 360 degrees using the three phase differences directed to the approximately true orientation, thereby realizing the technical effect of positioning of the anchor device in the range of 360 degrees.

**BRIEF DESCRIPTION OF DRAWINGS**

FIG. 1a to FIG. 1b is a schematic diagram illustrating disposing positions of first antennas according to an embodiment of the disclosure.
FIG. 2 is a flowchart of a positioning method according to an embodiment of the disclosure.
FIG. 3 is a schematic diagram illustrating an orientation to which a phase difference is directed according to an embodiment of the disclosure.
FIG. 4 is a schematic diagram illustrating an exemplary historical orientation and an exemplary estimated orientation according to an embodiment of the disclosure.
FIG. 5 is a schematic diagram illustrating possible transmission and reception of a data package according to an embodiment of the disclosure.
FIG. 6 is a schematic structural diagram of a positioning device according to an embodiment of the disclosure.

**DETAILED DESCRIPTION**

A positioning method and a positioning device are provided according to the embodiments of the disclosure, to position a beacon device in a range of 360 degrees by an anchor device.

In order to solve the above problem, the technical solutions according to the embodiments of the disclosure have the overall concept as follows.

In the technical solutions according to the embodiments of the disclosure, the anchor device has at least three first antennas. A disposing position of at least one of the at least three first antennas is not collinear with a disposing position of other first antennas. The anchor device receives a signal transmitted from the second antenna of the beacon device through each of the at least three first antennas, and acquires a phase difference of the signals received through each pair of first antennas based on phases of the signals received through the at least three first antennas. Since at least one first antenna is disposed to be not collinear with the other first antenna(s), at least three phase differences of all of the phase differences are directed to closest orientations, and mirroring orientations to which mirroring phase differences corresponding to the at least three phase differences are directed and an orientation to which other phase difference is directed does not converge to the same orientation. Therefore, at least three phase differences directed to closest orientations are extracted, and the orientation of the beacon device is determined based on the at least three phase differences. It can be seen that a signal from the second antenna is received by the above at least three first antennas, a singular solution is excluded based on the phase difference, an orientation of the beacon device is determined within the range of 360 degrees using the three phase differences directed to the approximately true orientation, thereby realizing the technical effect of positioning of the anchor device in the range of 360 degrees.

The technical solutions of the disclosure are described in detail below based on the accompanying drawings and the embodiments. It is to be understood that the embodiments of the disclosure and characteristics in the embodiments are used for describing the technical solutions of the disclosure in detail, rather than limiting the technical solutions of the disclosure thereto. Without conflict, the embodiments of the disclosure and the characteristics of the embodiment may be combined with each other.

The terms 'and/or' herein is merely used for describing an association relation of associated objects, and indicates that there may be three relations. For example, A and/or B may indicate three cases as follows: there is only A; there are both A and B; and there is only B. In addition, a character '/' herein may generally indicate that there is a 'or' relation between two associated objects.

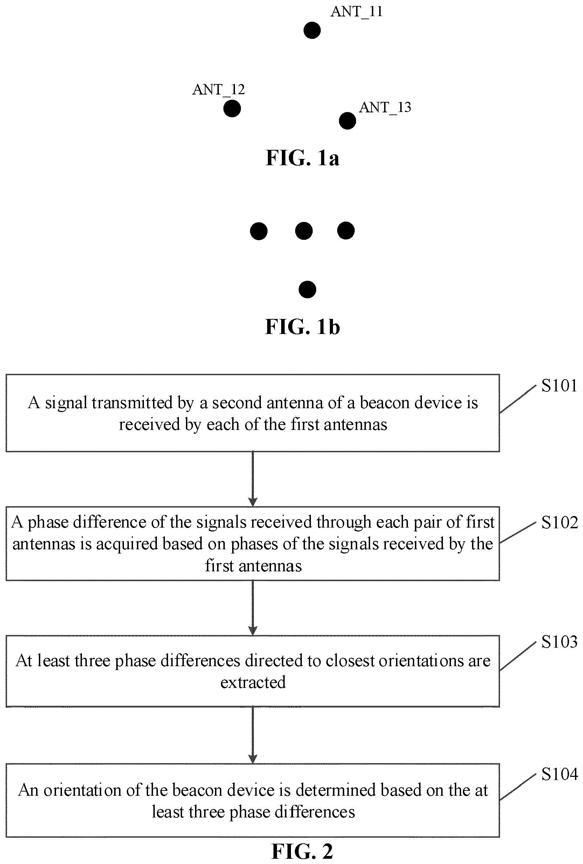

A positioning method is provided in a first aspect of the embodiments of the disclosure, which is applied to an electronic device provided with an anchor, i.e., an anchor device. The anchor device according to the embodiment of the disclosure includes at least three first antennas. In an implementation, there may be three antennas, four antennas or ten antennas, which may be selected by those skilled in the art according to actual situations and there is no limitation in the disclosure. A disposing position of at least one of the at least three first antennas is not collinear with a disposing position of other antenna than the at least one first antenna. The first antennas are disposed to be vertical to an antenna disposing plane, and a position where the first antenna is in contact with the antenna disposing plane is a disposing position. As illustrated in FIG. 1a which is a schematic diagram illustrating disposing positions of the first antennas, there are three first antennas (including ANT_11, ANT_12 and ANT_13) in FIG. 1a, and each pair of disposing positions of the three disposing positions are collinear with each other, but the three disposing positions are not collinear with each other, and form a triangle. Alternatively, as illustrated in FIG. 1b which is a schematic diagram illustrating disposing positions of the first antennas, disposing positions of three of four first antennas are collinear with each other, and a disposing position of other first antenna than the three first antennas is not collinear with the disposing positions of the three first antennas.

In a case that the disposing position of at least one first antenna is not collinear with the disposing position of the other first antenna, connection lines for connecting each pair of first antennas and extensions of the connection lines may intersect.

With reference to FIG. 2 which is a flowchart of a positioning method according to an embodiment of the disclosure, the method includes S101 to S104.

At S101, a signal transmitted by a second antenna of a beacon device is received by each of the first antennas.

At S102, a phase difference of the signals received through each pair of first antennas is acquired based on phases of the signals received through each of the at least three first antennas.

At S103, at least three phase differences directed to closest orientations are extracted.

At S104, an orientation of the beacon device is determined based on the at least three phase differences.

In the embodiment of the disclosure, the beacon device, i.e. an electronic device provided with a beacon, has at least one second antenna. The beacon device transmits a signal to the first antennas through the second antenna, and receives a signal transmitted from the first antenna, so as to interact with the anchor device. At S101, the anchor device receives a signal transmitted from the second antenna through each of the first antennas.

Since positions of the first antennas relative to the second antenna are different, phases of signals received through the first antennas from the second antenna are different. At S102, a phase difference of the signals received through each pair of first antennas is calculated based on phases of the signals received through the at least three first antennas. With taking three first antennas illustrated in FIG. 1a as an example, a phase of a signal received through the first antenna ANT_11 is PI, a phase of a signal received through the first antenna ANT_12 is P2, and a phase of a signal received through the first antenna ANT_13 is P3. Phase differences for the first antenna ANT_11 and the first antenna ANT_12 are P12A and P12B, respectively, phase differences for the first antenna ANT_11 and the first antenna ANT_13 are P13A and P13B, respectively, and phase differences for the first antenna ANT_12 and the first antenna ANT_13 are P23A and P23B, respectively. Each phase difference is directed to an orientation.

It can be known from the geometric principle that two phase differences may be calculated based on phases of signals received through each pair of antennas. Therefore, orientations to which the two phase differences are directed are mirror-symmetrical with respect to a connection line for connecting the two antennas or an extension of the connection line. For example, orientations to which P12A and P12B are directed are mirror-symmetrical with respect to a connection line for connecting the first antenna ANT_11 and the first antenna ANT_12 or an extension of the connection line. Also, in the orientations to which the two phase differences are directed, one is a regular solution, that is, a true orientation of the beacon device, the other is a singular solution, that is, a fake orientation, i.e. a mirroring orientation of the beacon device.

Furthermore, due to mirror symmetry, the anchor device in the related art can position the beacon device only in a range of 180 degrees in front of the anchor device or in a range of 180 degrees at the back of the anchor device, and cannot position the beacon device in a range of 360 degrees.

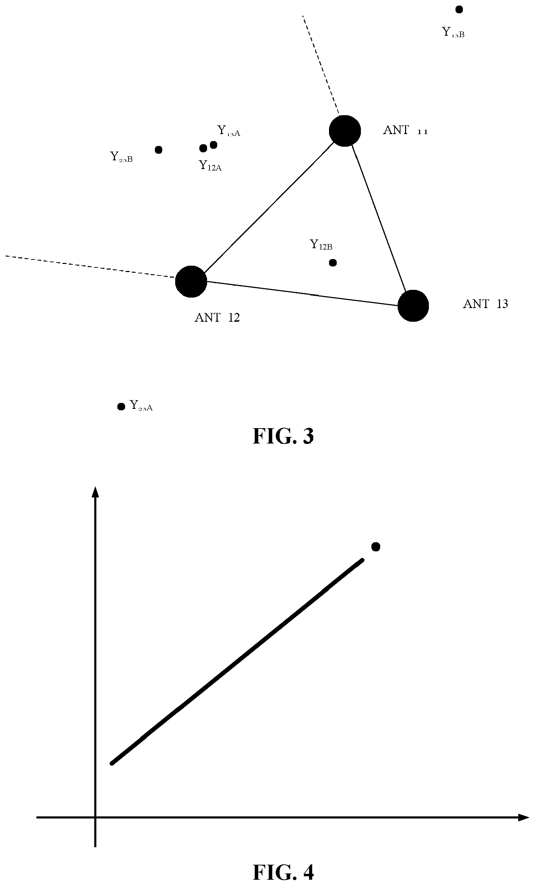

In the embodiment of the disclosure, since a disposing position of at least one first antenna is not collinear with the disposing position of other first antennas than the at least one first antenna, a connection line for connecting at least two first antennas is not parallel to other connection line for connecting the first antennas. Therefore, orientations to which all of the phase differences are directed do not converge to two straight lines. With taking the disposing positions of the first antennas illustrated in FIG. 1a as an example, as illustrated in FIG. 3, an orientation Y12A to which P12A is directed and an orientation Y12B to which P12B is directed are mirror-symmetrical with respect to a connection line for connecting the first antenna ANT_11 and the first antenna ANT_12 or an extension of the connection line, an orientation Y13A to which P13A is directed and an orientation Y13B to which P13B is directed are mirror-symmetrical with respect to a connection line for connecting the first antenna ANT_11 and the first antenna ANT_13 or an extension of the connection line, and an orientation Y23A to which P23A is directed and an orientation Y23B to which P23B is directed are mirror-symmetrical with respect to a connection line for connecting the first antenna ANT_12 and the first antenna ANT_13 or an extension of the connection line. A dashed line illustrated in FIG. 3 denotes an extension of the connection line for connecting two first antennas.

Since a connection line for connecting at least two first antennas is not parallel to other connection line for connecting the first antennas, and one of the mirror-symmetrical orientations is a true orientation, orientations to which at least three phase differences of all phase differences are directed converge to the same orientation. That is, at least three phase differences are directed to a same orientation, or close orientations, as Y12A, Y13A and Y23B illustrated in FIG. 3. Orientations to which other phase differences than the at least three phase differences are directed do not converge to the same orientation, as Y12B, Y13B and Y23A illustrated in FIG. 3.

As such, at S103, the three phase differences directed to the close orientations are extracted. Specifically, the

5

anchor device calculates a distance between the orientations to which each pair of phase differences are directed, and extracts phase differences corresponding to three orientations, each pair of which has a shortest distance therebetween.

Then, at S104, an orientation of the beacon device is determined based on the at least three phase differences. Specifically, in the embodiment of the disclosure, the orientation of the beacon device may be determined by the following process.

A suspicious orientation of the beacon device is determined based on the at least three phase differences.

Whether a confidence level of the suspicious orientation reaches a first threshold is determined based on a historical orientation of the beacon device.

In a case that the confidence level of the suspicious orientation reaches the first threshold, the suspicious orientation is determined as the orientation of the beacon device. In a case that the confidence level of the suspicious orientation does not reach the first threshold, the suspicious orientation is not determined as the orientation of the beacon device, and the orientation of the beacon device is determined based on the historical orientation of the beacon device.

Specifically, the suspicious orientation of the beacon device is determined based on the above three phase differences directed to closest orientations. The suspicious orientation is determined by the following manner in the embodiment of the disclosure.

Whether at least three phase differences are directed to the same orientation is determined.

An orientation to which any one of the at least three phase differences is directed is determined as the suspicious orientation in a case that the at least three phase differences are directed to the same orientation.

An average orientation of the orientations to which the at least three phase differences are directed is determined as the suspicious orientation in a case that the at least three phase differences are directed to different orientations.

Whether the at least three phase differences are directed to the same orientation is determined at first. In a case that the at least three phase differences are directed to the same orientation, it is determined that orientations to which the at least three phase differences are directed are the same as one another, and the orientation to which any one of the at least three phase differences is directed is determined as the suspicious orientation. In a case that the at least three phase differences are directed to difference orientations, it is determined that the at least three phase differences are not directed to the same orientation, an average orientation of the orientations to which the at least three phase differences are directed is calculated in the embodiment of the disclosure, and the average orientation is determined as the suspicious orientation.

Then, the anchor device reads the historical orientation of the beacon device, and further determines whether the suspicious orientation determined in current positioning is an orientation of the beacon device. The historical orientation in the embodiment of the disclosure is an orientation of the beacon device within a preset time period before the current positioning. The preset time period is for example three minutes or one minute, which is not limited in the disclosure. Whether the suspicious orientation is the orientation of the beacon device is determined by determining whether the confidence level of the suspicious orientation in the current positioning reaches the first threshold. Whether the confidence level of the suspicious orientation reaches the first threshold may be determined based on the historical orientation in the following manner.

An estimated orientation is acquired based on the historical orientation.

A ratio of a difference between the suspicious orientation and the estimated orientation to the estimated orientation is calculated as the confidence level.

Whether the ratio is greater than or equal to the first threshold is determined.

In a case that the ratio is greater than or equal to the first threshold, it is determined that the confidence level of the suspicious orientation reaches the first threshold. In a case that the ratio is less than the first threshold, it is determined that the confidence level of the suspicious orientation does not reach the first threshold.

Generally, the orientation of the beacon device varies according to a set rule, and a probability that the orientation of the beacon device varies greatly suddenly is small. Therefore, in the embodiment of the disclosure, the anchor device estimates an estimated orientation based on the historical orientation according to statistics principles. For example, FIG. 4 is a schematic diagram illustrating an exemplary historical orientation and an exemplary estimated orientation. A graph in FIG. 4 denotes a historical orientation, and it can be seen that the historical orientation changes approximately linearly. An estimated orientation denoted by a dot in FIG. 4 is estimated according to a linear change principle of the curve.

Upon acquiring the suspicious orientation, a difference between the suspicious orientation and the estimated orientation is further calculated. In the embodiment of the disclosure, the difference between the suspicious orientation and the estimated orientation may be obtained by subtracting the estimated orientation from the suspicious orientation, or subtracting the suspicious orientation from the estimated orientation, which is not limited in the disclosure. A ratio of the difference between the suspicious orientation and the estimated orientation to the estimated orientation is acquired, and the ratio is taken as the confidence level of the suspicious orientation. In an implementation, the ratio of the difference between the suspicious orientation and the estimated orientation to the estimated orientation may be represented as 'a ratio of the estimated orientation to the difference between suspicious orientation and the estimated orientation' or '1- a ratio of the difference between the suspicious orientation and the estimated orientation to the estimated orientation', which is not limited in the disclosure.

As the suspicious orientation gets close to the estimated orientation, a difference between the suspicious orientation and the estimated orientation become small, and the confidence level of the suspicious orientation become great. Also, as the suspicious orientation departs from the estimated orientation, the difference between the suspicious orientation and the estimated orientation become large, and the confidence level of the suspicious orientation become small.

Then, the above ratio is compared with the first threshold. In a case that the above ratio is greater than or equal to the first threshold, it is determined that the confidence level reaches the first threshold, and the confidence level of the suspicious orientation is high, and thus the suspicious orientation is determined as the orientation of the beacon device positioned currently. In a case that the above ratio is less than the first threshold, it is determined that the confidence level does not reach the first threshold, and the confidence level of the suspicious orientation is low, and thus the suspicious orientation is not determined as the orientation of the beacon device positioned currently.

Furthermore, in the embodiment of the disclosure, in a case that the confidence level of the suspicious orientation does not reach the first threshold, the orientation of the beacon device is determined based on the historical orientation. In an implementation, the estimated orientation may be determined as the orientation of the beacon device positioned currently, alternatively, an average orientation of the historical orientation is determined as the orientation of the beacon device positioned currently, which may be set by those skilled in the art according to actual situation, and is not limited in the disclosure.

It can be known from the above description that since a signal transmitted through the second antenna is received through at least three first antennas which are disposed to be not collinear with each other. In a positioning result, at least three phase differences are directed to the close orientations, and other phase difference than the at least three phase differences are directed to dispersive orientations. Furthermore, the anchor device may exclude a singular solution, and acquire the orientation of the beacon device, thereby positioning the beacon device in a range of 360 degrees.

Furthermore, in order to improve positioning accuracy and facilitating positioning by each of the first antennas, disposing positions of at least three first antennas of the anchor device are at vertexes of a polygon in an optional embodiment. In other words, only two first antennas are disposed on a connection line for connecting the two first antennas and an extension of the connection line, as illustrated in FIG. 1a. In an implementation, the polygon formed by the disposing positions may be equilateral or non-equilateral. For example, the polygon may be an equilateral triangle, an isosceles triangle, a square, a rectangle, an equilateral hexagonal or the like, which is not limited in the embodiment of the disclosure.

In practice, it is to be understood by those skilled in the art that the disposing plane is uneven and/or the first antennas do not have the same length in an implementation, however, a transmitting terminal and a receiving terminal of all of the first antennas are in the same plane.

A signal wave of communication between the first antenna and the second antenna in the embodiment of the disclosure is a high-frequency radio-frequency wave such as an Ultra Wideband (UWB) wave, a bluetooth wave or a Zigbee protocol wave, which is not limited in the disclosure. Furthermore, in order to ensure that signals received through each pair of first antennas is in one communication period, the length of the longest side of the polygon formed by the disposing positions is less than a half wavelength of the signal.

For example, in a case that a UWB wave of 6.5GHz is used for communication, a wavelength of the signal wave is 46.1mm, and a half wavelength is 23.1mm. Ten percent of the half wavelength is reserved in consideration of an error signal, to prevent an orientation value from exceeding a communication period in a case that an error occurs in the measurement signal. Therefore, the length of a longest side of the polygon is determined to be ninety percent of the half wavelength, that is, 20.8mm.

In conjunction with the above embodiment, furthermore, the at least three first antennas in the embodiment of the disclosure satisfy a vertical linear polarization condition, and purity of linear polarization is greater than a second threshold. The purity of linear polarization is determined by a ratio of principal polarization to cross-polarization, and the second threshold may be greater than or equal to 6dB such as 10dB, 12dB or 13dB, so that the purity of linear polarization of the first antenna is large. Since the signal transmitted by the beacon device is received through non-principal polarized antenna, that is, a cross-polarized antenna, a measured phase difference of the signals is not accurate, and the positioning is failed. A first antenna which satisfies the vertical polarization condition and has a high purity of linear polarization is selected, to avoid failed positioning.

Furthermore, in a case that the beacon device is disposed in an electronic device having a varying attitude such as a balance vehicle, a robot or a remote controller, in order to avoid the second antenna from being affected by the varying attitude when transmitting or receiving a signal, the second antenna in the embodiment of the disclosure satisfies a circular polarization condition, and an axial ratio may be selected to be less than 4.5dB such as any value in a range from 1dB to 4.5dB.

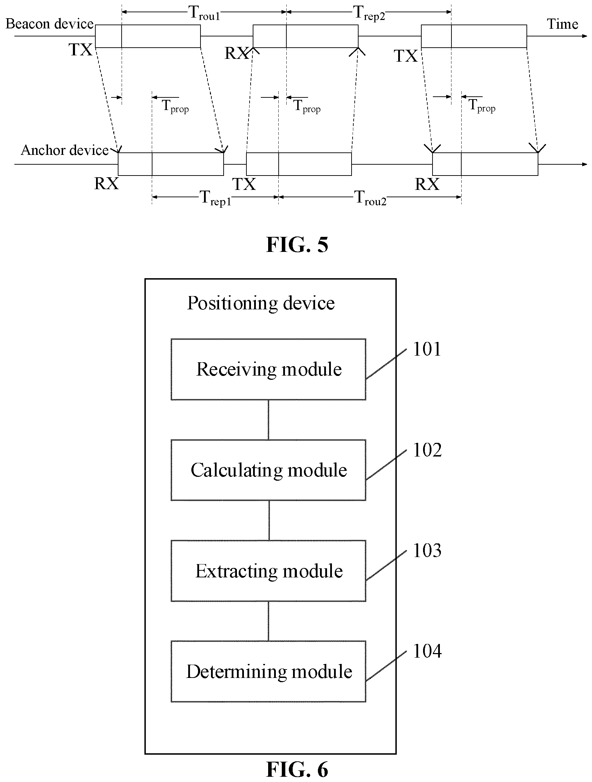

In addition, a method for determining a distance to the beacon device by the anchor device is described simply below. Reference is made to FIG. 5 which is a schematic diagram illustrating possible transmission and reception of a data packet.

The anchor device measures a distance to the beacon device using a two-way ranging (TWR) method. In the embodiment of the disclosure, the distance is measured through three communication processes to position the beacon device.

Firstly, the beacon device transmits a first data packet to the anchor device. The beacon device records a time stamp for identifying when the first data packet is transmitted while transmitting the first data packet. The time stamp for identifying when the first data packet is transmitted is denoted as tt1 in the embodiment of the disclosure.

Secondly, the anchor device receives the first data packet, and records a time stamp for identifying when the first data stamp is received. The time stamp for identifying when the first data packet is received is denoted as ta1 in the embodiment of the disclosure. The anchor device transmits a second data packet to the beacon device, to notify the beacon device that the first data packet is received. The anchor records a time stamp for identifying when the second data packet is transmitted while transmitting the second data packet. The time stamp for identifying when the second data packet is transmitted is denoted as ta1 in the embodiment of the disclosure.

Thirdly, the beacon device receives the second data packet, and records a time stamp for identifying when the second data packet is received. The time stamp for identifying when the second data packet is received is denoted as tt2 in the embodiment of the disclosure. The beacon device further calculates a time stamp for identifying when a third data packet is transmitted, and contains the recorded tt1, tt2 and tt3 in the third data packet. When a clock of the beacon device reaches tt3, the beacon device transmits the third data packet to the anchor device, to notify the anchor device that the second data packet is received.

Fourthly, the anchor device receives the third data packet, and records a time stamp for identifying when the third data packet is received, which is denoted as ta3.

Since the clock of the beacon device may be not synchronous with the clock of the anchor device, the following values are calculated.

$$\text{Tround1 (as } T_{rou1} \text{ illustrated in FIG. 5)} = \text{tt2-tt1,}$$

$$\text{Treply1 (as } T_{rep1} \text{ illustrated in FIG. 5)} = \text{ta2-ta1,}$$

$$\text{Tround2 (as } T_{rou2} \text{ illustrated in FIG. 5)} = \text{ta3-ta2,}$$

$$\text{Treply2 (as } T_{rep2} \text{ illustrated in FIG. 5)} = \text{tt3-tt2.}$$

Tround1 denotes a time period elapsed from a time when the first data packet is transmitted to a time when an acknowledge for the first data packet is received, Treply 1 denotes a time period consumed by the anchor device for feeding back the second data packet, Tround2 denotes a time period elapsed from a time when the second data packet is transmitted to a time when an acknowledge for the second data packet is received, and Treply2 denotes a time period consumed by the beacon device for feeding back the third data packet. Tprop in FIG. 5 denotes a transit time from a time when the data packet is transmitted to a time when the data packet is received.

It can be seen that T=(Tround1-Treply1)/2 represents a transit time of the first data packet transmitted from the beacon device to the anchor device. A distance DIS between the beacon device and the anchor device is DIS=T*V, where V is a propagation speed of a signal, and is a known value.

In the above TWR process, each of the at least three first antennas receives the first data packet, transmits the second data packet and receives the third data packet. The anchor device may determine the orientation of the beacon device and a distance to the beacon device in one TWR process, or in two TWR processes respectively, which is not limited in the disclosure.

In addition, when determining the orientation of the beacon device, the anchor device may determine the orientation of the beacon device based on any one selected from a signal of the received first data packet or a signal of the second data packet. Alternatively, in a case that strength of the signal of the received first data packet is different from that of the signal of the second data packet, the orientation of the beacon device may be determined based on the signal having higher strength.

The anchor device positions the beacon device based on the orientation and the distance.

In addition, in an implementation, in order to save device resources and reduce a frequency of transmitting a data packet, the first data packet, the second data packet and the third data packet described above may also contain information and data used in interaction between the beacon device and the anchor device, such as control signaling transmitted to the beacon device by the anchor device, a request instruction from the beacon device, a polarization direction of the second antenna and an attitude of the beacon device, which may be selected by those skilled in the art according to actual situation, and is not limited in the disclosure.

Based on the same inventive concept as the positioning method in the above embodiment, a positioning device is further provided in a second aspect of the disclosure. As illustrated in FIG. 6, the positioning device includes a receiving module 101, a calculating module 102, an extracting module 103 and a determining module 104.

The receiving module 101 is configured to receive a signal transmitted through a second antenna of the beacon device through each of first antennas.

The calculating module 102 is configured to acquire a phase difference between the signals received through each pair of first antennas based on phases of the signals received through the at least three first antennas.

The extracting module 103 is configured to extract at least three phase differences directed to closest orientations.

The determining module 104 is configured to determine an orientation of the beacon device based on the at least three phase differences.

The determining module 104 is configured to: determine a suspicious orientation of the beacon device based on the at least three phase differences; determine whether a confidence level of the suspicious orientation reaches a first threshold based on a historical orientation of the beacon device; determine the suspicious orientation as an orientation of the beacon device in a case that the confidence level of the suspicious orientation reaches the first threshold. In a case that the confidence level of the suspicious orientation does not reach the first threshold, the suspicious orientation is not determined as an orientation of the beacon device, and an orientation of the beacon device is determined based on the historical orientation of the beacon device.

Furthermore, the determining module 104 is configured to determine whether the at least three phase differences are directed to the same orientation, determine an orientation to which any one of the at least three phase differences are directed as the suspicious orientation in a case that the at least three phase differences are directed to the same orientation, determine an average orientation of the orientations to which the at least three phase differences are directed as the suspicious orientation in a case that the at least three phase differences are directed to different orientations.

In an embodiment, disposing positions of the at least three first antennas are at vertexes of a polygon, and the length of a longest side of the polygon is less than a half wavelength of the signal.

In an embodiment, the at least three first antennas satisfy a vertical linear polarization condition, and purity of the linear polarization is greater than a second threshold.

In an embodiment, the second antenna satisfies a circular polarization condition.

Various changes and implementations in the positioning method according to the above embodiments illustrated in FIG. 1 to FIG. 5 are also suitable for the positioning device according to the embodiment. The implementation of the positioning device according to the embodiment can be known clearly by those skilled in the art based on detailed description for the above positioning method, and thus is not described repeatedly here anymore for simplicity of the specification.

The above one or more technical solutions according to the embodiments of the disclosure at least have one or more technical effects.

In the technical solutions according to the embodiments of the disclosure, the anchor device has at least three first antennas, a disposing position of at least one of which is not collinear with a disposing position of each of one or more other first antennas. The anchor device receives a signal transmitted through the second antenna of the beacon device through each of the first antennas, and acquires a phase difference between the signals received through each pair of first antennas based on phases of the signals received through the at least three first antennas. Since at least one first antenna is disposed to be not collinear with each of one or more other first antennas, at least three phase differences of all phase differences are directed to closest orientations, and mirroring orientations to which mirroring phase differences corresponding to the at least three phase differences are directed and an orientation to which other phase difference than the at least three phase differences is directed does not converge to the same orientation. Therefore, at least three phase differences directed to closest orientations are extracted, and the orientation of the beacon device is determined based on the at least three phase differences. It can be seen that a signal transmitted through the second antenna is received through the above at least three first antennas, and further a singular solution is excluded based on the phase difference. Therefore, the orientation of the beacon device is determined in a range of 360 degrees using the three phase differences directed to the approximately true orientation, thereby realizing a technical effect of positioning the anchor device in a range of 360 degrees.

It can be understood by those skilled in the art that the embodiments of the disclosure may be implemented as a method, a system or a computer program product. Therefore, the disclosure may be implemented as a complete hardware embodiment, a complete software embodiment or an embodiment of hardware together with software. Also, the disclosure may be implemented in a manner of a computer program product implemented in one or more computer usable memory mediums (including but not limited to a magnetic memory, a CD-ROM and an optical memory) containing computer usable program codes in the disclosure.

The disclosure is described with reference to a flowchart and/or a block diagram of the method, the device (system) and the computer program product according to the embodiments of the disclosure. It is to be understood that each flow and/or block in the flowchart and/or the block diagram and a combination of the flow and/or the block in the flowchart and/or the block diagram may be implemented by a computer program instruction. The computer program instruction may be provided to a general computer, a dedicated computer, an embedded processor or a processor of other programmable data processing device to give rise to a machine, with the result that the instruction executed by the computer or the processor of other programmable data processing device give rise to a device for realizing functions specified in one or more flows in the flowchart and/or one or more blocks of the block diagram.

The computer program instructions may also be stored in a computer readable memory which can guide a computer or other programmable data processing device to operate in a particular manner, such that the instructions stored in the computer readable memory give rise to a product including an instruction apparatus. The instruction apparatus can realize functions specified in one or more flows in the flowchart and/or one or more blocks in the block diagram.

The computer program instructions may also be loaded into a computer or other programmable data processing device, such that a series of operation steps are executed on the computer or other programmable device, to implement processing of the computer. Therefore, the instructions executed in the computer or other programmable device can provide steps for realizing functions specified in one or more flows in the flowchart and/or one or more blocks of the block diagram.

It is apparent that various modifications and variations can be made onto the disclosure by those skilled in the art without departing from the spirit and scope of the disclosure. As such, if the changes and variations made onto the disclosure fall within the scope of the claims of the disclosure and an equivalent technical scope thereof, the disclosure is intended to contain the modifications and variations.

**INDUSTRIAL APPLICABILITY**

With the technical solution in the embodiments of the disclosure, the signal through the second antenna is received through at least three first antennas (a disposing position of at least one of which is not collinear with a disposing position of each of one or more other first antennas), a singular solution is excluded based on a phase difference, and an orientation of the beacon device is determined in a range of 360 degrees using three phase differences directed to approximately true orientation, thereby having a technical effect of positioning the anchor device in a range of 360 degrees.

**Claims**

1. A positioning method applied to an anchor device comprising at least three first antennas, a disposing position of at least one of the at least three first antennas being not collinear with a disposing position of each of one or more other first antennas, the method comprising:

   receiving, by each of the at least three first antennas, a signal transmitted by a second antenna of a beacon device;
   acquiring a phase difference between the signals received by each pair of first antennas of the at least three first antennas based on phases of the signals received by the at least three first antennas;
   extracting at least three phase differences directed to closest orientations; and
   determining an orientation of the beacon device based on the at least three phase differences.

2. The method of claim 1, wherein the determining an orientation of the beacon device based on the at least three phase differences comprises:

   determining a suspicious orientation of the beacon device based on the at least three phase differences;
   determining whether a confidence level of the suspicious orientation reaches a first threshold based on a historical orientation of the beacon device; and
   determining the suspicious orientation as an orientation of the beacon device responsive to that the confidence level of the suspicious orientation reaches the first threshold; and determining that the suspicious orientation is not the orientation of the beacon device responsive to that the confidence level of the suspicious orientation does not reach the first threshold, and determining the orientation of the beacon device based on the historical orientation of the beacon device.

3. The method of claim 2, wherein the determining a suspicious orientation of the beacon device based on the at least three phase differences comprises:

determining whether the at least three phase differences are directed to a same orientation; determining an orientation to which any one of the at least three phase differences is directed as the suspicious orientation responsive to that the at least three phase differences are directed to a same orientation; or determining an average orientation of the orientations to which the at least three phase differences are directed as the suspicious orientation responsive to that the at least three phase differences are directed to different orientations.

4. The method of claim 2, wherein the determining whether the confidence level of the suspicious orientation reaches the first threshold based on the historical orientation of the beacon device comprises:

acquiring an estimated orientation based on the historical orientation; calculating a ratio of a difference between the suspicious orientation and the estimated orientation to the estimated orientation, and taking the ratio as the confidence level; determining whether the ratio is greater than or equal to the first threshold; and determining that the confidence level of the suspicious orientation reaches the first threshold responsive to that the ratio is greater than or equal to the first threshold, and determining that the confidence level of the suspicious orientation does not reach the first threshold responsive to that the ratio is less than the first threshold.

5. The method of any one of claims 1 to 4, wherein the disposing positions of the at least three first antennas are at vertexes of a polygon, and length of a longest side of the polygon is less than a half wavelength of the signal.

6. The method of claim 5, wherein the at least three first antennas satisfy a vertical linear polarization condition, and purity of linear polarization is greater than a second threshold.

7. The method of claim 5, wherein the second antenna satisfies a circular polarization condition.

8. A positioning device applied to an anchor device, wherein the anchor device comprises at least three first antennas, a disposing position of at least one of the at least three first antennas is not collinear with a disposing position of each of one or more other first antennas, the positioning device comprises:

a receiving module configured to receive a signal transmitted through a second antenna of a beacon device through each of the at least three first antennas; a calculating module configured to acquire a phase difference between the signals received through each pair of first antennas of the at least three first antennas based on phases of the signals received by the at least three first antennas; an extracting module configured to extract at least three phase differences directed to closest orientations; and a determining module configured to determine an orientation of the beacon device based on the at least three phase differences.

9. The device of claim 8, wherein the determining module is configured to:

determine a suspicious orientation of the beacon device based on the at least three phase differences; determine whether a confidence level of the suspicious orientation reaches a first threshold based on a historical orientation of the beacon device; and determine the suspicious orientation as an orientation of the beacon device responsive to that the confidence level of the suspicious orientation reaches the first threshold; and determining that the suspicious orientation is not the orientation of the beacon device responsive to that the confidence level of the suspicious orientation does not reach the first threshold, and determining the orientation of the beacon device based on the historical orientation of the beacon device.

10. The device of claim 9, wherein the determining module is configured to:

determine whether the at least three phase differences are directed to a same orientation; determine the orientation to which any one of the at least three phase differences is directed as the suspicious orientation responsive to that the at least three phase differences are directed to a same orientation; and

determine an average orientation of the orientations to which the at least three phase differences are directed as the suspicious orientation responsive to that the at least three phase differences are directed to different orientations.

11. The device of any one of claims 8 to 10, wherein the disposing positions of the at least three first antennas are at vertexes of a polygon, and length of a longest side of the polygon is less than a half wavelength of the signal.

12. The device of claim 11, wherein the at least three first antennas satisfy a vertical linear polarization condition, and purity of linear polarization is greater than a second threshold.

13. The device of claim 11, wherein the second antenna satisfies a circular polarization condition.

14. A computer storage medium having stored thereon computer executable instructions to execute the positioning method of any one of claims 1 to 7.

ANT_11

●

ANT_12

●

●ANT_13

**FIG. 1a**

● ● ●

●

**FIG. 1b**

| | |
|---|---|
| A signal transmitted by a second antenna of a beacon device is received by each of the first antennas | S101 |

| | |
|---|---|
| A phase difference of the signals received through each pair of first antennas is acquired based on phases of the signals received by the first antennas | S102 |

| | |
|---|---|
| At least three phase differences directed to closest orientations are extracted | S103 |

| | |
|---|---|
| An orientation of the beacon device is determined based on the at least three phase differences | S104 |

**FIG. 2**

**FIG. 3**

**FIG. 4**

**FIG. 5**

**FIG. 6**

# INTERNATIONAL SEARCH REPORT

International application No.

PCT/CN2017/070615

### A. CLASSIFICATION OF SUBJECT MATTER

G01S 3/46 (2006.01) i

According to International Patent Classification (IPC) or to both national classification and IPC

### B. FIELDS SEARCHED

Minimum documentation searched (classification system followed by classification symbols)

G01S, H04W

Documentation searched other than minimum documentation to the extent that such documents are included in the fields searched

Electronic data base consulted during the international search (name of data base and, where practicable, search terms used)

CNPAT, WPI, EPODOC, CNKI, GOOGLE: 定位, 天线, 相位差, 不共线, 直线, 信号, 阈值, 门限值, 置信度, 历史, 锚, locat+, antenna, line, signal, threshold, history, anchor

### C. DOCUMENTS CONSIDERED TO BE RELEVANT

| Category* | Citation of document, with indication, where appropriate, of the relevant passages | Relevant to claim No. |
|---|---|---|
| Y | CN 101801085 A (HUAWEI TECHNOLOGIES CO., LTD.), 11 August 2010 (11.08.2010), description, paragraphs 0054-0090 | 1-14 |
| Y | CN 102460202 A (SNU R&DB FOUNDATION), 16 May 2012 (16.05.2012), description, paragraphs 0079-0087 and 0102, and figure 6 | 1-14 |
| Y | CN 104330769 A (SHENZHEN GENVICT TECHNOLOGY CO., LTD.), 04 February 2015 (04.02.2015), claims 1-4 | 1-14 |
| A | CN 102193091 A (NATIONZ TECHNOLOGIES INC.), 21 September 2011 (21.09.2011), entire document | 1-14 |
| A | CN 101782643 A (SOUTHEAST UNIVERSITY), 21 July 2010 (21.07.2010), entire document | 1-14 |
| A | US 2015331086 A1 (DELPHI TECH. INC.), 19 November 2015 (19.11.2015), entire document | 1-14 |

☐ Further documents are listed in the continuation of Box C.　　☒ See patent family annex.

| | | |
|---|---|---|
| *　　Special categories of cited documents: | "T" | later document published after the international filing date or priority date and not in conflict with the application but cited to understand the principle or theory underlying the invention |
| "A"　document defining the general state of the art which is not considered to be of particular relevance | | |
| "E"　earlier application or patent but published on or after the international filing date | "X" | document of particular relevance; the claimed invention cannot be considered novel or cannot be considered to involve an inventive step when the document is taken alone |
| "L"　document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O"　document referring to an oral disclosure, use, exhibition or other means | | |
| "P"　document published prior to the international filing date but later than the priority date claimed | "&" | document member of the same patent family |

| Date of the actual completion of the international search | Date of mailing of the international search report |
|---|---|
| 11 July 2017 | 02 August 2017 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>LIU, Juan<br><br>Telephone No. (86-10) 62413241 |

Form PCT/ISA/210 (second sheet) (July 2009)

## INTERNATIONAL SEARCH REPORT
### Information on patent family members

| | | International application No. |
|---|---|---|
| | | PCT/CN2017/070615 |

| Patent Documents referred in the Report | Publication Date | Patent Family | Publication Date |
|---|---|---|---|
| CN 101801085 A | 11 August 2010 | None | |
| CN 102460202 A | 16 May 2012 | WO 2010137790 A1 | 02 December 2010 |
| | | EP 2438456 A1 | 11 April 2012 |
| | | US 2012075145 A1 | 29 March 2012 |
| | | KR 100979623 B1 | 01 September 2010 |
| CN 104330769 A | 04 February 2015 | None | |
| CN 102193091 A | 21 September 2011 | None | |
| CN 101782643 A | 21 July 2010 | None | |
| US 2015331086 A1 | 19 November 2015 | CN 105093213 A | 25 November 2015 |
| | | EP 2944977 A1 | 18 November 2015 |

Form PCT/ISA/210 (patent family annex) (July 2009)